# EUROPÄISCHE PATENTSCHRIFT

(11) **EP 3 948 135 B1**
(45) Veröffentlichungstag und Bekanntmachung des Hinweises auf die Patenterteilung: **07.06.2023**
(21) Anmeldenummer: 20721384.4
(22) Anmeldetag: 24.03.2020
(51) Int. Cl.: F28D 20/00, F28D 20/02, F28F 5/00

(54) **VORRICHTUNG ZUM SPEICHERN VON ENERGIE IN FORM VON LATENTER WÄRME**
DEVICE FOR STORAGE OF ENERGY AS LATENT HEAT
DISPOSITIF DE STOCKAGE D'ENERGIE SOUS FORME DE CHALEUR LATENTE

(30) Priorität: 25.03.2019 AT 502582019
(43) Veröffentlichungstag der Anmeldung: 09.02.2022
(73) Patentinhaber: Berndorf Band GmbH, 2560 Berndorf (AT)
(72) Erfinder: PROSCHEK, Michael, 2525 Schönau (AT); FIRMBERGER, Gerald, 1030 Wien (AT)
(74) Vertreter: Burger, Hannes
(86) Internationale Anmeldenummer: PCT/AT2020/060128
(87) Internationale Veröffentlichungsnummer: WO 2020/191422

(56) Entgegenhaltungen:
- WO-A1-2018/085872
- DE-A1-102004 020 993
- DE-A1-102013 113 634
- JP-A- S6 124 993
- US-A1- 2017 003 079

## Beschreibung

Die Erfindung betrifft eine Vorrichtung zum Speichern von Energie in Form von latenter Wärme und zum Abgeben gespeicherter Wärmeenergie gemäß dem Oberbegriff von Anspruch 1.

Eine einschlägige Vorrichtung ist aus der EP 2 942 592 A1 bekannt geworden. Die bekannte Vorrichtung weist ein als Speicherbehälter dienendes Gehäuse auf, welches ein phasenwechselndes Speichermaterial, ein sogenanntes Phase Change Material (PCM), als Wärmespeicher beinhaltet. Das Speichermaterial gibt durch Wechsel von einem flüssigen zu einem zum festen Aggregatzustand thermische Energie ab bzw. nimmt thermische Energie bei einem Übergang von einem festen zu einem flüssigen Aggregatzustand auf, ohne dass sich hierbei die Temperatur des Speichermaterials wesentlich ändert. Mittig in dem zylinderförmigen Gehäuse ist ein mit dem PCM in direktem Kontakt stehender Wärmetauscher zur Übertragung der thermischen Energie vorgesehen. Bei Entziehen von thermischer Energie aus dem Speichermaterial mittels des Wärmetauschers kommt es ausgehend von der Oberfläche des Wärmetauschers in radialer Richtung um den Wärmetauscher zu einer Kristallisation des Speichermaterials. In Bereichen, die näher an dem Wärmetauscher liegen, findet hierbei eine Kristallisation des Speichermaterials früher statt als in weiter entfernt liegenden Bereichen des Speichermaterials. Durch die Kristallisation des Speichermaterials wird jedoch die Wärmeübertragung von dem Speichermaterial auf den Wärmetauscher stark beeinträchtigt. Durch Zunahme einer sich infolge der fortschreitenden Kristallisation um den Wärmetauscher immer weiter aufbauenden kristallisierten Schicht wird dieser in zunehmenden Maße gegenüber den noch flüssigen Bereichen des Speichermaterials isoliert. Durch diesen Effekt sinkt bei herkömmlichen Vorrichtungen die Prozessgeschwindigkeit und infolge dessen auch die übertragbare Leistung. Zugleich bestimmt die Größe herkömmlicher Vorrichtungen wesentlich deren Leistung. Bei den bestehenden Anlagen hängt somit die Leistung maßgeblich von deren Kapazität ab, wobei auch die Leistung nicht regelbar bzw. einstellbar ist.

Eine Vorrichtung gemäß dem Oberbegriff von Anspruch 1 ist aus der DE 102004020993 A1 bekannt geworden, die DE102013113634 A1 betrifft ein Verfahren zur Entnahme von gespeicherter Wärmeenergie aus einer Vorrichtung zum Speichen von Energie in Form latenter Wärme.

### GEAENDERTES BLATT

Weitere einschlägige Vorrichtungen sind aus der US 2017/003079A1, der JP S6124993A sowie der WO 2018/085872 A1 bekannt geworden.

Es ist daher eine Aufgabe der Erfindung, einen Wärmespeicher zu schaffen, der die Nachteile des Stands der Technik überwindet und die Leistung der Anlage regelbar bzw. einstellbar zu machen.

Diese Aufgabe wird mit einer Vorrichtung der eingangs genannten Art erfindungsgemäß durch die Merkmale des kennzeichnenden Teils von Anspruch 1 gelöst.

Die erfindungsgemäße Lösung erlaubt es, aufgrund der Verwendung eines Endlosbandes als Förderband für das Speichermaterial einen optimalen Kontakt zwischen dem Speichermaterial und dem Wärmetauscher herzustellen. Aufgrund des Endlosbandes kann ein infolge des Energieaustauschs mit dem Wärmetauscher bereits kristallisierter Teil des Speichermaterials umgehend weiter transportiert werden, während ein noch flüssiger Teil des Speichermaterials aus dem Speicherbehälter auf das Endlosband aufgebracht und zu dem Wärmetauscher transportiert werden kann. Somit kann mit der Erfindung eine kontinuierliche und konstante Energieentnahme aus dem Speicherbehälter realisiert werden. In umgekehrter Richtung kann zur Speicherung von Energie auch kristallisiertes Material auf das Endlosband aufgebracht und durch Energiezufuhr über den Wärmetauscher in eine flüssige Phase umgewandelt und dem Speicherbehälter zugeführt werden. Durch die Geschwindigkeit, mit der das Endlosband umläuft, kann der Prozess zur Übertragung von Energie aus dem bzw. in das Speichermaterial gesteuert werden, sodass sich die Menge an entnommener bzw. zugeführter Leistung exakt einstellen lässt. Zudem wird bei der erfindungsgemäßen Lösung gegenüber herkömmlichen Lösungen eine Verringerung er Prozessgeschwindigkeit verhindert, da eine Isolierung des Wärmetauschers durch kristallisiertes Material mittels des Endlosbandes sehr effizient unterbunden werden kann.

Bei einer vorteilhaften Weiterbildung kann die Vorrichtung zumindest ein thermisch isoliertes Gehäuse aufweisen, in welchem der zumindest eine Speicherbehälter, das zumindest eine Endlosband und der zumindest eine Wärmetauscher angeordnet sind.

Gemäß einer vorteilhaften Ausführungsform weist das Endlosband ein Obertrum und ein Untertrum auf, wobei der zumindest eine Wärmetauscher mit einer Innenseite des Obertrums thermisch gekoppelt ist und die Außenseite des Obertrums eine Transportoberfläche für das aus dem zumindest einen Speicherbehälter entnommene Speichermaterial bildet. Auf diese Weise lässt sich zum einen ein guter Wärmeübergang zwischen Speichermaterial und Wärmetauscher gewährleisten, zum anderen kann ein sicherer und zuverlässiger Transport des Speichermaterials erzielt werden.

Eine besonders vorteilhafte Weiterbildung der Erfindung, die sich unter anderem durch eine gute Steuerbarkeit der Bewegung des Endlosbandes auszeichnet und somit eine gezielte Leistungsentnahme bzw. Zufuhr ermöglicht, besteht darin, dass das Endlosband zwischen zumindest zwei Rollen umlaufend angeordnet ist, wobei zumindest eine der Rollen mittels eines Antriebs, insbesondere mittels eines Antriebs mit umkehrbarer Antriebsrichtung, angetrieben ist.

Als besonders vorteilhaft vor allem in Hinblick mit Verwendung eines Austragsbehälters hat sich erwiesen, wenn die zumindest zwei Rollen höhenversetzt zueinander angeordnet sind, und das Endlosband zwischen den beiden Rollen schräg zu einer horizontalen Richtung verläuft. Auf diese Weise kann ein unkontrolliertes Austreten von Speichermaterial aus dem Austragsbehälter vermieden werden, wobei die entnommene Leistung sehr einfach über die Einstellung der Bandgeschwindigkeit geregelt bzw. gesteuert werden.

Eine sehr gute Wärmeübertragung zwischen Speichermaterial und Wärmetauscher kann dadurch erzielt werden, dass das Endlosband einen Bandkörper aus Metall aufweist.

Um ein Aufbringen des Speichermaterial von dem Speicherbehälter auf das Endlosband zu erleichtern, kann der zumindest eine Speicherbehälter zumindest eine Austragsöffnung zum Austragen des Speichermaterials von dem Speicherbehälter auf das Endlosband aufweisen.

Als besonders vorteilhaft hat sich eine Ausführungsform erwiesen, bei welcher die Vornchtung zumindest einen weiteren Speicherbehälter für das Speichermaterial aufweist, wobei ein zur Aufnahme des Speichermaterials zur Verfügung stehendes Gesamtvolumen aller Speicherbehälter größer ist als ein Volumen des Speichermaterials, insbesondere ist das zur Aufnahme des Speichermaterials zur Verfügung stehende Gesamtvolumen aller Speicherbehälter zumindest doppelt so groß wie das Volumen des Speichermaterials. Bei dieser Ausführungsform kann das aus dem ersten Speicherbehälter entnommene Speichermaterial nach Abgabe der darin gespeicherten latenten Wärme an den Wärmetauscher in den zweiten Speicherbehälter eingelagert werden, sodass dieses wieder für die Speicherung von Energie zur Verfügung steht.

Gemäß einer bevorzugten Variante der Erfindung kann das Endlosband in einer Materialflussrichtung zwischen dem ersten Speicherbehälter und dem zweiten Speicherbehälter angeordnet sein. Diese Variante der Erfindung ermöglicht einen einfachen Wechsel zwischen Energiespeicherung und Energieentnahme bei dem Betrieb der Vorrichtung.

Zum besseren Verständnis der Erfindung wird diese anhand der nachfolgenden Figuren näher erläutert.

Es zeigen jeweils in stark vereinfachter, schematischer Darstellung:
- Fig. 1: eine erste Variante einer erfindungsgemäßen Vorrichtung und
- Fig. 2: eine zweite Variante einer erfindungsgemäßen Vorrichtung

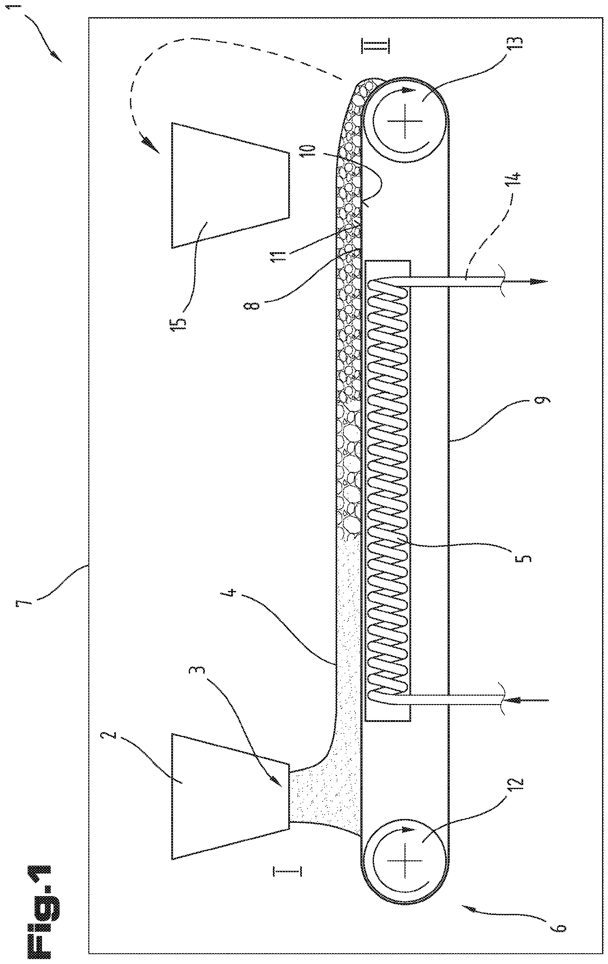

Gemäß Fig. 1 weist eine erfindungsgemäße Vorrichtung 1 zum Speichern von Energie in Form von latenter Wärme und zum Abgeben gespeicherter Wärmeenergie einen Speicherbehälter 2 auf. Der Speicherbehälter 2 kann eine Austragsöffnung 3 zur einfachen Entnahme von darin gespeichertem Speichermaterial 4 aufweisen. Bei dem Speichermaterial 4, welches zur Speicherung von Wärmenergie dient, handelt es sich um ein phasenwechselndes Material, ein sogenanntes Phase Change Material (PCM). Derartige Materialien, die dem Fachmann in großer Zahl bekannt sind, besitzen üblicherweise eine hohe Schmelzwärme. Aufgrund dieser Eigenschaft kann das Speichermaterial 4 bei einem Phasenübergang große Mengen thermischer Energie abgeben oder aufnehmen. Hierbei bleibt die Temperatur des Speichermaterials im Wesentlichen unverändert. Wärmeverluste durch Wärmeleitung, Wärmestrahlung oder Konvektion bei der Speicherung von Energie auch über große Zeiträume hinweg lassen sich somit durch die Verwendung des Speichermaterials 4 vermeiden.

Bei dem Speichermaterial 4 handelt es sich bevorzugt um anorganische oder organische Salze und/oder Salzhydrate oder Mischungen daraus, insbesondere Natriumchlorid, Natriumsulfat, Natriumnitrat, Kaliumnitrat, Natriumacetat oder Hydrate dieser Salze. Bevorzugt weist das Speichermaterial 4 einen Schmelzpunkt zwischen 150 bis 800 °C auf. Als für ein Beispiel für ein gut geeignetes Speichermaterial 4 hat sich Natriumnitrat NaNO3 mit einem Schmelzpunkt von 306°C, einer Schmelzenthalpie von 178 kJ7kg, einer Dichte in der festen Phase von 2200 kg/m³ und einer Dichte von in der flüssigen Phase von 1900 kg/m³, Wärmeleitfähigkeit von 0,5 W/m K und einer Wärmekapazität von 1665 J/kg K herausgestellt. Natürlich kann auch jedes andere geeignete PCM Material als Speichermaterial 4 zum Einsatz kommen. So sind grundsätzlich auch Wachse als Speichermaterial 4 geeignet.

Weiters weist die Vorrichtung einen Wärmetauscher 5 zum Abführen und Übertragen gespeicherter Wärmeenergie von dem Speichermaterial 4 auf ein Wärmetransportfluid auf. Der Wärmetauscher 5 ist thermisch mit einem Endlosband 6 gekoppelt, welches zum Transport von aus dem Speicherbehälter 2 entnommenen Speichermaterial 4 dient. Beispielsweise kann das Endlosband 6 an dem Wärmetauscher 5 gleitend aufliegen. Um gute Wärmeleiteigenschaften zu erzielen kann das Endlosband 6 einen Bandkörper aus Metall aufweisen. Weiters kann das Endlosband 6 zwischen zwei Rollen 12, 13 umlaufend angeordnet sein. Bevorzugt ist mindest eine der Rollen 12, 13 mittels eines Antriebs, insbesondere mittels eines Antriebs mit umkehrbarer Antriebsrichtung, angetrieben.

Das Endlosband 6 weist ein Obertrum 8 und ein Untertrum 9 auf. Der Wärmetauscher 5 ist bevorzugt mit einer Innenseite 10 des Obertrums 8 thermisch gekoppelt. Die Außenseite 11 des Obertrums 8 bildet eine Transportoberfläche für das aus dem zumindest einen Speicherbehälter 2entnommene Speichermaterial 4.

Das Speichermaterial 4 kann über die Austragsöffnung 3 aus dem Speicherbehälter 2 direkt auf die Außenseite 11 aufgegossen werden. Alternativ kann die Austragsöffnung 3 mit einer hier nicht dargestellten Austragsvorrichtung verbunden sein, die beispielsweise eine Düse umfasst, und auf die Außenseite 11 aufgespritzt werden. Auch kann die Austragsöffnung 3 selbst die Form einer Düse, insbesondere einer quer über das Endlosband 6 verlaufenden Schlitzdüse aufweisen. Grundsätzlich sind die unterschiedlichsten Möglichkeiten zur Aufbringung des Speichermaterials 4 auf die Außenseite 11 denkbar, so könnte das Speichermaterial 4 beispielsweise auch aus dem Speicherbehälter geschöpft werden. Nach dem Aufbringen des Speichermaterials 4 auf der Außenseite 11 kann dieses gleichmäßig verteilt werden. Hierzu kann eine Vorrichtung zum Gleichstreichen des Speichermaterials 4, beispielsweise in Form einer quer über das Endlosband 6 verlaufende Leiste, vorgesehen sein. Die Austragsöffnung 3 kann zum Verschließen des Speicherbehälter 2 mit einem Schließ-/Öffnungsmechanismus verschlossen und geöffnet werden. In einem einfachen Fall kann die Austragsöffnung 3 mittels einer an dem Speicherbehälter 2 schwing- und/oder verschiebbar gelagerten Verschlussklappe verschlossen und geöffnet werden. Alternativ oder zusätzlich kann der Speicherbehälter 2 beispielsweise auch durch Betätigen eines Ventils verschlossen und geöffnet werden.

Bevorzugt wird der Wärmetauscher 5 in einem Gegenstrombetrieb verwendet. D.h., dass eine Strömungsrichtung eines den Wärmetauscher 5 durchströmenden Wärmetransportfluids 14, welches zum Transport der von dem Speichermaterial 4 abgegebenen Wärme verwendet wird, einer Transportrichtung des Endlosbandes 6 und somit des darauf befindlichen Speichermaterials 4 entgegengesetzt ist. Auf diese Weise lässt sich der Wirkungsgrad gegenüber einer Verwendung des Wärmetauschers 5 im Gleichstrombetrieb erhöhen, in welchem die Strömungsrichtung des den Wärmetauscher durchströmenden Fluids und die Bewegungsrichtung des auf dem Endlosband 6 transportierten Speichermaterials 4 gleichsinnig sind. Natürlich ist aber auch ein Betrieb des Wärmetauschers 5 im Gleichstrombetrieb, wie in Fig. 1 dargestellt möglich.

Weiters kann die Vorrichtung ein thermisch isoliertes Gehäuse 7 aufweisen, in welchem der Speicherbehälter 2 und das Endlosband 4 und der Wärmetauscher 5 angeordnet sind.

Die Vorrichtung 1 kann einen weiteren Speicherbehälter 15 für das Speichermaterial 4 aufweisen. Ein zur Aufnahme des Speichermaterials 4 zur Verfügung stehendes Gesamtvolumen aller Speicherbehälter 2, 15 ist bevorzugt größer als ein Volumen des Speichermaterials 4. Besonders bevorzugt ist das zur Aufnahme des Speichermaterials zur Verfügung stehende Gesamtvolumen aller Speicherbehälter 2, 15 zumindest doppelt so groß wie das Volumen des Speichermaterials 4. Auf diese Weise lässt sich das gesamte Speichermaterial 4 von dem ersten Speicherbehälter 2 in den zweiten Speicherbehälter 15 während der Entnahme von Energie umlagern. Um ein einfaches Umlagern des Speichermaterials 4 zu ermöglichen, kann das Endlosband 6 in einer Materialflussrichtung zwischen dem ersten Speicherbehälter 2 und dem zweiten Speicherbehälter 15 angeordnet sein.

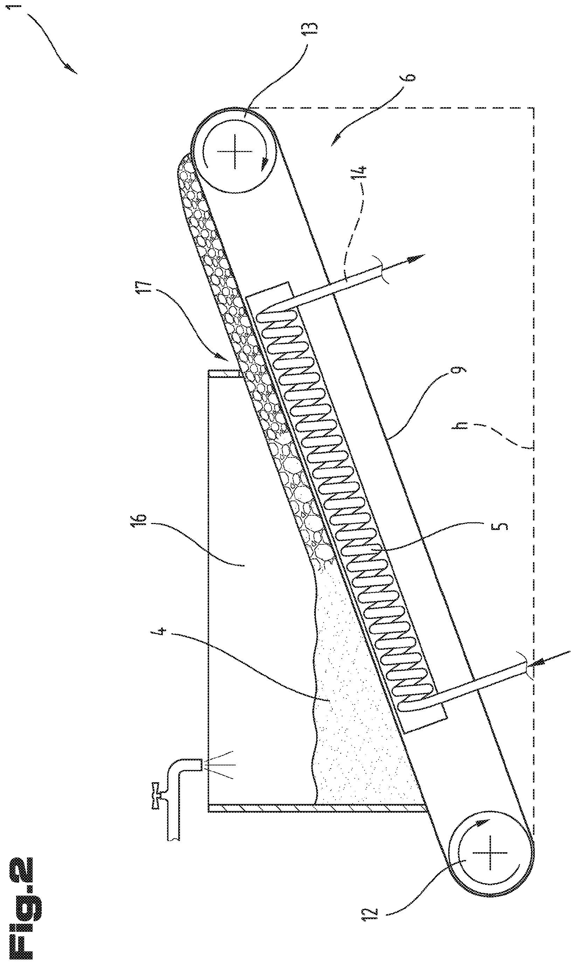

Wie aus Fig. 2 ersichtlich ist, kann die Vorrichtung 1 auch einen Austragsbehälter 16 zur Zwischenspeicherung des Speichermaterials aufweisen. Der Austragsbehälter 16 ist unten zumindest abschnittsweise offen, wobei zumindest ein Abschnitt eines Bodens des Austragsbehälters 16 durch einen Abschnitt der Außenseite 11 des Obertrums 8 gebildet ist. Aus dem Speicherbehälter 2, 15 entnommenes Speichermaterial 4 kann in den Austragsbehälter 16 gefüllt werden, wobei das Speichermaterial 4 auf der Außenseite 11 des Obertrums 8 zu liegen kommt. Der Austragsbehälter 16 kann an einem in Umlaufrichtung des Endlosbandes 6 betrachtet stirnseitigen Ende einen von der Außenseite 11 des Obertrums 8 und zumindest einem Abschnitt zumindest einer stirnseitigen Wandung des Austragsbehälters 16 begrenzten Schlitz 17 aufweisen. Durch den Schlitz 17 kann Speichermaterial 4 in Umlaufrichtung des Endlosbandes 6 aus dem Austragsbehälter 16 befördert werden.

Gemäß Fig. 2 können die zumindest zwei Rollen 12, 13 höhenversetzt zueinander angeordnet sein, wobei das Endlosband 6 zwischen den beiden Rollen 12, 13 schräg zu einer horizontalen Richtung h verläuft. Auf diese Weise lässt sich auf einfache Weise realisieren, dass nur bei einer Bewegung des Endlosbandes 6 Speichermaterial 4 aus dem Austragsbehälter 16 befördert wird. Im Übrigen entspricht die Funktion der in Fig. 2 dargestellten Ausführungsform jener in Fig. 1 gezeigten Variante der Erfindung.

Im Folgenden werden das erfindungsgemäße Verfahren sowie vorteilhafte Weiterbildungen desselben unter Bezugnahme auf die oben beschriebenen Vorrichtungen näher erläutert.

Bei dem erfindungsgemäßen Verfahren wird in einem ersten Schritt das Speichermaterial 4 aus dem Speicherbehälter 2 auf die Oberfläche des mit dem Wärmetauscher 5 thermisch gekoppelten Endlosbandes 6 aufgebracht, und in einem zweiten, mit oder ohne Zwischenschritte auf den ersten Schritt folgenden Schritt, wird dem auf die Oberfläche des Endlosbandes 6 aufgebrachten Speichermaterial 4 die in Form latenter Wärme gespeicherte Energie mittels des Wärmetauschers 5 entzogen und auf das Wärmetransportfluid 14 übertragen.

Bevorzugt umfasst das Verfahren die mit oder ohne Zwischenschritte aufeinanderfolgenden Schritte:
- Entnehmen des zumindest einen, in einer flüssigen Phase vorliegenden Speichermaterials 4 aus dem Speicherbehälter 2;
- Aufbringen des in der flüssigen Phase vorliegenden Speichermaterials 4 auf das Endlosband 6 an einer ersten Position I;
- Bewegen des aufgebrachten Speichermaterials 4 mittels des Endlosbandes 6 an eine zweite Position II, wobei während des Bewegens des Speichermaterials 4 von der ersten Position I an die zweite Position II ein Phasenübergang des Speichermaterials 4 von der flüssigen Phase in eine feste Phase erfolgt während die Temperatur des Speichermaterials zwischen der ersten Position I und der zweiten Position II vorzugsweise konstant gehalten wird bzw. näherungsweise konstant bleibt;
- Entfernen des Speichermaterials 4 von dem Endlosband 6 an der zweiten Position II.

Mit dem an der zweiten Position II von dem Endlosband 6 entfernten Speichermaterial 4 kann der zweite Speicherbehälter 15 der Vorrichtung 1 befüllt werden. Das Befüllen des zweiten Speicherbehälters 15 kann beispielsweise unter Verwendung eines geeigneten Förderers, beispielsweise mittels eines, Schaufeln zur Aufnahme des von dem Endlosband 6 entfernten, kristallisierten Speichermaterials 4 aufweisenden Vertikalförderers, erfolgen. Das in dem Speicherbehälter 15 gefüllte Speichermaterial 4 steht dann wieder zur Aufnahme von extern zugeführter Wärmeenergie und deren Speicherung zur Verfügung. Die Entnahme von Energie aus dem Speicher 15 kann dann analog zu der oben beschriebenen Entnahme von Energie aus dem Speicherbehälter 2 erfolgen.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Vorrichtung
- 2: Speicherbehälter
- 3: Austragsöffnung
- 4: Speichermaterial
- 5: Wärmetauscher
- 6: Endlosband
- 7: Gehäuse
- 8: Obertrum
- 9: Untertrum
- 10: Innenseite
- 11: Außenseite
- 12: Rolle
- 13: Rolle
- 14: Wärmetransportfluid
- 15: Speicherbehälter
- 16: Austragsbehälter
- I: erste Position
- II: zweite Position
- h: horizontale Richtung

## Patentansprüche

1. Vorrichtung (1) zum Speichern von Energie in Form von latenter Wärme und zum Abgeben gespeicherter Wärmeenergie, wobei die Vorrichtung (1) zumindest ein phasenwechselndes Speichermaterial (4) als Wärmespeicher sowie zumindest einen Speicherbehälter (2) zur Aufnahme des phasenwechselnden Speichermaterials (4) und zumindest einen Wärmetauscher (5) zum Abführen und Übertragen gespeicherter Wärmeenergie von dem Speichermaterial (4) auf ein Wärmetransportfluid aufweist, wobei die Vorrichtung (1) zumindest ein mit dem zumindest einen Wärmetauscher (5) thermisch gekoppeltes Endlosband (6) zum Transport von aus dem zumindest einen Speicherbehälter (2) entnommenen Speichermaterial (4) aufweist, **dadurch gekennzeichnet, dass** sie zumindest einen Austragsbehälter (16) zur Zwischenspeicherung des Speichermaterials aufweist, wobei zumindest ein Abschnitt eines Bodens des Austragsbehälters (16) durch einen Abschnitt der Außenseite (11) des Obertrums (8) gebildet ist.

2. Vorrichtung nach Anspruch 1, **dadurch gekennzeichnet, dass** die Vorrichtung (1) zumindest ein thermisch isoliertes Gehäuse (7) aufweist, in welchem der zumindest eine Speicherbehälter (2), das zumindest eine Endlosband (4) und der zumindest eine Wärmetauscher (5) angeordnet sind.

3. Vorrichtung nach Anspruch 1 oder 2, **dadurch gekennzeichnet, dass** das Endlosband (6) ein Obertrum (8) und ein Untertrum (9) aufweist, wobei der zumindest eine Wärmetauscher (5) mit einer Innenseite (10) des Obertrums (8) thermisch gekoppelt ist und die Außenseite (11) des Obertrums (8) eine Transportoberfläche für das aus dem zumindest einen Speicherbehälter (2, 15) entnommene Speichermaterial (4) bildet.

4. Vorrichtung nach Anspruch 1, **dadurch gekennzeichnet, dass** der Austragsbehälter (16) an einem in Umlaufrichtung des Endlosbandes (6) betrachtet stirnseitigen Ende einen von der Außenseite (11) des Obertrums (8) und zumindest einem Abschnitt zumindest einer stirnseitigen Wandung des Austragsbehälters (16) begrenzten Schlitz (17) aufweist, durch den Speichermaterial (4) in Umlaufrichtung des Endlosbandes (6) aus dem Austragsbehälter befördert wird.

5. Vorrichtung nach einem der Ansprüche 1 bis 4, **dadurch gekennzeichnet, dass** das Endlosband (6) zwischen zumindest zwei Rollen (12, 13) umlaufend angeordnet ist, wobei zumindest eine der Rollen (12, 13) mittels eines Antriebs, insbesondere mittels eines Antriebs mit umkehrbarer Antriebsrichtung, angetrieben ist.

6. Vorrichtung nach Anspruch 5, **dadurch gekennzeichnet, dass** die zumindest zwei Rollen (12, 13) höhenversetzt zueinander angeordnet sind, und das Endlosband (6) zwischen den beiden Rollen (12, 13) schräg zu einer horizontalen Richtung (h) verläuft.

7. Vorrichtung nach einem der Ansprüche 1 bis 6, **dadurch gekennzeichnet, dass** das Endlosband (6) einen Bandkörper aus Metall aufweist.

8. Vorrichtung nach einem der Ansprüche 1 bis 7, **dadurch gekennzeichnet, dass** der zumindest eine Speicherbehälter (2) zumindest eine Austragsöffnung (3) zum Austragen des Speichermaterials (4) von dem Speicherbehälter (2) auf das Endlosband aufweist.

9. Vorrichtung nach einem der Ansprüche 1 bis 8, **dadurch gekennzeichnet, dass** die Vorrichtung (1) zumindest einen weiteren Speicherbehälter (15) für das Speichermaterial (4) aufweist, wobei ein zur Aufnahme des Speichermaterials (4) zur Verfügung stehendes Gesamtvolumen aller Speicherbehälter (2, 15) größer ist als ein Volumen des Speichermaterials (4), insbesondere ist das zur Aufnahme des Speichermaterials zur Verfügung stehende Gesamtvolumen aller Speicherbehälter (2, 15) zumindest doppelt so groß wie das Volumen des Speichermaterials (4).

10. Vorrichtung nach einem der Ansprüche 1 bis 9, **dadurch gekennzeichnet, dass** das Endlosband (6) in einer Materialflussrichtung zwischen dem ersten Speicherbehälter (2) und dem zweiten Speicherbehälter (15) angeordnet ist.

## Claims

1. A device (1) for storing energy in the form of latent heat and for emitting stored heat energy, wherein the device (1) has at least one phase-changing storage material (4) as a heat store and at least one storage container (2) for accommodating the phase-changing storage material (4), and at least one heat exchanger (5) for removing and transferring stored heat energy from the storage material (4) to a heat transport fluid, wherein the device (1) has at least one endless belt (6) thermally coupled to the at least one heat exchanger (5) for transporting storage material (4) taken from the at least one storage container (2), **characterized in that** it has at least one discharging container (16) for temporarily storing the storage material, wherein at least one section of a base of the discharging container (16) is formed by a section of the outer side (11) of the upper run (8).

2. The device according to claim 1, **characterized in that** the device (1) has at least one thermally insulated housing (7), in which the at least one storage container (2), the at least one endless belt (4), and the at least one heat exchanger (5) are arranged.

3. The device according to claim 1 or 2, **characterized in that** the endless belt (6) has an upper run (8) and a lower run (9), wherein the at least one heat exchanger (5) is thermally coupled to an inner side (10) of the upper run (8), and the outer side (11) of the upper run (8) forms a transport surface for the storage material (4) taken from the at least one storage container (2, 15).

4. The device according to claim 1, **characterized in that** the discharging container (16) has a slot (17) on an end at the front side when viewed in the circumferential direction of the endless belt (6), bounded by the outer side (11) of the upper run (8) and at least one section of at least one front-side wall of the discharging container (16), through which slot (17) storage material (4) is conveyed out of the discharging container in the circumferential direction of the endless belt (6).

5. The device according to one of claims 1 to 4, **characterized in that** the endless belt (6) is circumferentially arranged between at least two rollers (12, 13), wherein at least one of the rollers (12, 13) is driven by means of a drive, in particular by means of a drive with a reversible drive direction.

6. The device according to claim 5, **characterized in that** the at least two rollers (12, 13) are arranged vertically offset from one another, and the endless belt (6) extends between the two rollers (12, 13), obliquely to a horizontal direction (h).

7. The device according to one of claims 1 to 6, **characterized in that** the endless belt (6) has a belt body made of metal.

8. The device according to one of claims 1 to 7, **characterized in that** the at least one storage container (2) has at least one discharging opening (3) for discharging the storage material (4) from the storage container (2) onto the endless belt.

9. The device according to one of claims 1 to 8, **characterized in that** the device (1) has at least one further storage container (15) for the storage material (4), wherein a total volume of all storage containers (2, 15) that is available for accommodating the storage material (4) is greater than a volume of the storage material (4), in particular, the total volume of all storage containers (2, 15) that is available for accommodating the storage material is at least twice as great as the volume of the storage material (4).

10. The device according to one of claims 1 to 9, **characterized in that** the endless belt (6) is arranged, in a direction of material flow, between the first storage container (2) and the second storage container (15).

## Revendications

1. Dispositif (1) pour le stockage d'énergie sous forme de chaleur latente et pour l'émission de l'énergie thermique stockée, dans lequel le dispositif (1) comprend au moins un matériau de stockage à changement de phase (4) en tant que réservoir de chaleur ainsi qu'au moins un récipient de stockage (2) pour le logement du matériau de stockage à changement de phase (4) et au moins un échangeur thermique (5) pour l'évacuation et la transmission de l'énergie thermique stockée du matériau de stockage (4) vers un fluide de transport de chaleur, dans lequel le dispositif (1) comprend au moins une bande sans fin (6) couplée thermiquement avec l'au moins un échangeur thermique (5) pour le transport du matériau de stockage (4) prélevé dans l'au moins un récipient de stockage (2), **caractérisé en ce qu'**il comprend au moins un récipient de décharge (16) pour le stockage intermédiaire du matériau de stockage, dans lequel au moins une portion d'un fond du récipient de décharge (16) est constituée d'une portion du côté externe (11) du brin supérieur (8).

2. Dispositif (1) selon la revendication 1, **caractérisé en ce que** le dispositif (1) comprend au moins un boîtier isolé thermiquement (7) dans lequel l' au moins un récipient de stockage (2), l'au moins une bande sans fin (4) et l'au moins un échangeur thermique (5) sont disposés.

3. Dispositif (1) selon la revendication 1 ou 2, **caractérisé en ce que** la bande sans fin (6) comprend un brin supérieur (8) et un brin inférieur (9), dans lequel l'au moins un échangeur thermique (5) est couplé thermiquement avec un côté interne (10) du brin supérieur (8) et le côté externe (11) du brin supérieur (8) constitue une surface de transport pour le matériau de stockage (4) prélevé dans l'au moins un récipient de stockage (2, 15).

4. Dispositif (1) selon la revendication 1, **caractérisé en ce que** le récipient de décharge (16) comprend, au niveau d'une extrémité frontale, vue dans la direction de circulation de la bande sans fin (6), une fente (17) délimitée par le côté externe (11) du brin supérieur (8) et au moins une portion d'au moins une paroi frontale du récipient de décharge (16), qui permet de convoyer le matériau de stockage (4) dans la direction de circulation de la bande sans fin (6) hors du récipient de décharge.

5. Dispositif (1) selon l'une des revendications 1 à 4, **caractérisé en ce que** la bande sans fin (6) est disposée de manière circulaire entre au moins deux rouleaux (12, 13), dans lequel au moins un des rouleaux (12, 13) est entraîné au moyen d'un dispositif d'entraînement, plus particulièrement au moyen d'un dispositif d'entraînement avec direction d'entraînement inversable.

6. Dispositif (1) selon la revendication 5, **caractérisé en ce que** les au moins deux rouleaux (12, 13) sont disposés de manière décalée en hauteur l'un par rapport à l'autre, et la bande sans fin (6) s'étend entre les deux rouleaux (12, 13) de manière oblique par rapport à une direction horizontale (h).

7. Dispositif (1) selon l'une des revendications 1 à 6, **caractérisé en ce que** la bande sans fin (6) comprend un corps de bande en métal.

8. Dispositif (1) selon l'une des revendications 1 à 7, **caractérisé en ce que** l'au moins un récipient de stockage (2) comprend au moins une ouverture décharge (3) pour la sortie du matériau de stockage (4) du récipient de stockage (2) vers la bande sans fin.

9. Dispositif (1) selon l'une des revendications 1 à 8, **caractérisé en ce que** le dispositif (1) comprend au moins un autre récipient de stockage (15) pour le matériau de stockage (4), dans lequel un volume total de tous les récipients de stockage (2, 15), disponible pour le logement du matériau de stockage (4), est supérieur à un volume du matériau de stockage (4), plus particulièrement le volume total de tous les récipients de stockage (2, 15), disponible pour le logement du matériau de stockage, est au moins le double du volume du matériau de stockage (4).

10. Dispositif (1) selon l'une des revendications 1 à 9, **caractérisé en ce que** la bande sans fin (6) est disposée dans une direction de flux de matériau entre le premier récipient de stockage (2) et le deuxième récipient de stockage (15).
